# EUROPÄISCHE PATENTSCHRIFT

(11) **EP 4 119 331 B1**
(45) Veröffentlichungstag und Bekanntmachung des Hinweises auf die Patenterteilung: **28.02.2024**
(21) Anmeldenummer: 21184953.4
(22) Anmeldetag: 12.07.2021
(51) Int. Cl.: B29C 64/245, B29C 64/379, B29C 64/129, B33Y 30/00, B33Y 40/00, B33Y 10/00

(54) **VORRICHTUNG ZUR AUFNAHME UND FIXIERUNG DES BAUTEILTRÄGERS EINES 3D-DRUCKERS UNTER AUSNUTZUNG VORHANDENER BEWEGUNGSACHSEN**
DEVICE FOR RECEIVING AND FIXING THE COMPONENT SUPPORT OF A 3D PRINTER USING EXISTING AXES OF MOVEMENT
DISPOSITIF DE LOGEMENT ET DE FIXATION DU PORTE-COMPOSANTS D'UNE IMPRIMANTE 3D À L'AIDE DES AXES DE MOUVEMENT EXISTANTS

(43) Veröffentlichungstag der Anmeldung: 18.01.2023
(73) Patentinhaber: DENTSPLY SIRONA Inc., York, PA 17401 (US); Sirona Dental Systems GmbH, 64625 Bensheim (DE)
(72) Erfinder: Kaufmann, Bernhard, 64625 Bensheim (DE); Hasenzahl, Thomas, 64625 Bensheim (DE); Schulz, Tobias, 64625 Bensheim (DE)
(74) Vertreter: Özer, Alpdeniz

(56) Entgegenhaltungen:
- CN-A- 110 625 930
- US-A1- 2007 077 323

## Beschreibung

### TECHNISCHES GEBIET DER ERFINDUNG

Die vorliegende Erfindung bezieht sich auf 3D Drucker, insbesondere auf die Bauplattform des 3D Druckers.

### HINTERGRUND DER ERFINDUNG

Laser und DLP basierte 3D Drucker nach dem Prinzip der "*over head vatpolymerization*" verarbeiten flüssige Photopolymerharze zu festen Bauteilen. Bei diesem Fertigungsprinzip werden die Bauteile schichtweise vertikal aus einer Harzwanne "gezogen". Hierfür sind sie direkt oder indirekt, über eine Stützstruktur, an einen Bauteilträger angebunden. Um Fehler in den Bauteilen zu vermeiden, muss der Bauteilträger während des Druckprozesses fest mit dem 3D Drucker (Z-Kinematik) verbunden sein. Zur Nachbehandlung, nach Beendigung des Druckprozesses, muss das Bauteil mit dem Bauteilträger aus dem 3D Drucker entnommen werden. Hierfür muss die Verbindung zwischen 3D Drucker und Bauteilträger gelöst werden. Vor Beginn des Druckprozesses muss wieder ein Bauteilträger in den 3D-Drucker eingesetzt und fest mit diesem verbunden werden.

Bei im Markt befindlichen 3D-Druckern wird der Bauteilträger in der Regel manuell durch den Anwender in den Drucker eingesetzt und durch einen Hebelmechanismus oder Schrauben fest mit dem Drucker verbunden. Alternativ kommen auch Robotersysteme zum Einsatz, die den manuellen Part des Anwenders übernehmen.

US 2007/077323 A1 offenbart einen 3D Drucker umfassend, eine Harzwanne zur Aufnahme von flüssigem Photopolymerharz zur Herstellung eines festen Bauteils; einen Bauteilträger zum schichtweisen Herausziehen des Bauteils aus der Harzwanne; eine Transportbox zum Ablegen des Bauteilträgers, wobei die Transportbox an einer bestimmten Stelle außerhalb der Harzwanne manuell platziert bzw. befestigt werden kann; eine Transportvorrichtung zum Entnehmen des Bauteilträgers aus der Transportbox und zum Transportieren desselben in die Harzwanne und zum Abwärts-und Aufwärtsbewegen des Bauteilträgers in der Harzwanne , wobei die Transportvorrichtung translatorische Achsen in der vertikalen und horizontalen Richtung aufweist, die jeweils mit einem Motor unabhängig angetrieben werden können, wobei die Transportvorrichtung eine Verriegelungsvorrichtung aufweist zum ablösbaren Verbinden des Bauteilträgers, wobei die Verriegelungsvorrichtung bei der Bewegung entlang der vertikalen translatorischen Achse durch den Antrieb des jeweiligen Motors eine bestimmte Position erreicht, an dem eine, an der vertikalen translatorischen Achse befindlicher Anschlag, ein Kopplungselement in Bewegung setzt wobei ein mit dem Kopplungselement in Verbindung stehender federverspannte Verriegelungspin in eine Verriegelungsposition bzw. Entriegelungsposition gebracht werden kann.

### OFFENBARUNG DER ERFINDUNG

Ein Ziel der vorliegenden Erfindung ist die Bereitstellung eines 3D Druckers mit einer Vorrichtung zur Aufnahme und Fixierung der Bauplattform, die das Aufnehmen/Ablegen der Bauplattform *ohne* zusätzliche Antriebsmotoren ermöglicht.

Dieses Ziel wurde durch den 3D Drucker nach Anspruch 1 erreicht. Die Gegenstände der abhängigen Ansprüche beziehen sich auf Weiterentwicklungen und bevorzugte Ausführungsformen.

Das wesentliche Merkmal der Erfindung liegt in der Nutzung vorhandener translatorischer Bewegungen durch die Motoren zum An- und Abkoppeln des Bauteilträgers vom 3D-Drucker.

In dem erfindungsgemäßen 3D Drucker werden die im 3D Drucker vorhandenen zwei translatorischen Achsen und deren jeweiligen Motoren genutzt zum Befestigen/Lösen des Bauteilträgers an den 3D-Drucker, zusätzliche Aktuatoren/Motoren werden *nicht* benötigt. Der Anwender muss lediglich vor dem 3D Drucken den, in der Transportbox abgelegten, Bauteilträger an die vorgesehene Position in den 3D-Drucker stellen/befestigen bzw. nach dem 3D Drucken dort entnehmen, und zur Nachbehandlungsstation tragen.

In einer bevorzugten Ausführungsform ist das Kopplungselement in Form einer horizontal beweglichen Schubstange bereitgestellt. Bei der Abwärtsbewegung wird die Schubstange durch eine Schräge des Anschlags in Bewegung gesetzt. Der Verriegelungspin ist an einer vertikal eingebauten federverspannten Zugstange angebracht. Die horizontal bewegliche Schubstange führt über eine Schräge an der vertikal eingebauten federverspannten Zugstange zu einer Abwärtsbewegung des Verriegelungspins in den Bauteilträger. Vorzugsweise hat die horizontal bewegliche Schubstange an seinen Beiden Enden Roller zum Kontaktieren der jeweiligen Schrägen.

In einer alternativen bevorzugten Ausführungsform ist das Kopplungselement in Form einer Wippe bereitgestellt. Bei der Abwärtsbewegung wird die Wippe durch den Anschlag in Bewegung gesetzt. Der Verriegelungspin ist an einer vertikal eingebauten federverspannten Zugstange angebracht. Durch die Bewegung führt die Wippe die vertikal eingebaute federverspannte Zugstange zu einer Abwärtsbewegung des Verriegelungspins in den Bauteilträger.

### KURZBESCHREIBUNG DER ZEICHNUNGEN

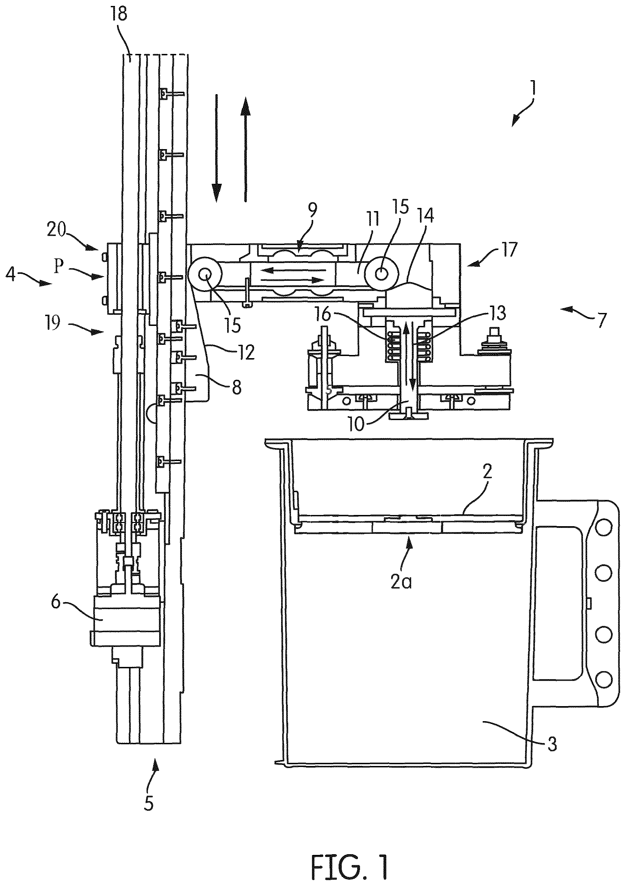

In der nachfolgenden Beschreibung wird die vorliegende Erfindung anhand von Ausführungsbeispielen unter Bezugnahme auf die Zeichnung näher erläutert, wobei Abb. 1 - zeigt eine schematische Teilansicht eines 3D Druckers nach einer Ausführungsform der Erfindung.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1.: 3D Drucker
- 2.: Bauteilträger
- 2a.: Bajonettöffnung
- 3.: Transportbox
- 4.: Transportvorrichtung
- 5.: Translatorische Achsen
- 6.: Motor
- 7.: Verriegelungsvorrichtung
- 8.: Anschlag
- 9.: Kopplungselement
- 10.: Verriegelungspin
- 11.: Schubstange
- 12.: Schräge
- 13.: Zugstange
- 14.: Schräge
- 15.: Roller
- 16.: Feder
- 17.: Z-Ausleger
- 18.: Z-Turm
- 19.: Gewindeschraube
- 20.: Gewindemutter

### P: Position am Z-Turm (18)

Abb.1 zeigt teilweise einen 3D Drucker nach einer Ausführungsform. Der 3D Drucker (1) umfasst eine Harzwanne (nicht gezeigt) zur Aufnahme von flüssigem Photopolymerharz zur Herstellung eines festen Bauteils; einen Bauteilträger (2) zum schichtweise Herausziehen des Bauteils aus der Harzwanne; eine Transportbox (3) zum Ablagen des Bauteilträgers (2), wobei die Transportbox (3) an einer bestimmten Stelle außerhalb der Harzwanne manuell platziert bzw. befestigt werden kann; eine Transportvorrichtung (4) zum Entnehmen des Bauteilträgers (2) aus der Transportbox (3) und zum Transportieren desselben in die Harzwanne, und zum Abwärts- und Aufwärtsbewegen bzw. auch Seitwärtsbewegen des Bauteilträger (2) in der Harzwanne. Die Transportvorrichtung (4) weist translatorische Achsen (5) in der vertikalen Richtung und horizontalen Richtung (nicht gezeigt) auf, die jeweils mit einem Motor (6) unabhängig angetrieben werden können. Die Transportvorrichtung (4) weist eine Verriegelungsvorrichtung (7) zum ablösbaren Verbinden des Bauteilträger (2) auf. Die vertikale translatorische Achse (5) bildet einen Z-Turm (18) in der Z-Richtung, in dem die Transportvorrichtung (4) durch den Motor (6) in der Z-Richtung in Bewegung gesetzt werden kann. Der Motor (6) ist mit einem Z-Ausleger (17) der Transportvorrichtung (4) über eine Gewindeschraube (19) und Gewindemutter (20) verbunden. Der gesamte Z-Turm (18) ist über an einer horizontalen translatorischen Achse (nicht gezeigt) in der horizontalen Richtung beweglich. Das Gestell des Z-Turms (18) ist über eine weitere Gewindeschraube und Gewindemutter mit dem zweiten Motor verbunden. Wenn die Verriegelungsvorrichtung (7) bei der Abwärtsbewegung (s. Pfeil nach unten) entlang der vertikalen translatorischen Achse (5) durch den Antrieb des jeweiligen Motors (6) eine bestimmte Position (P) erreicht hat, wird ein Kopplungselement (9) durch einen an der vertikalen translatorischen Achse (5) befindlichen Anschlag (8) in Bewegung gesetzt. Durch die Bewegung wird ein mit dem Kopplungselement (9) in Verbindung stehender federverspannte Verriegelungspin (10) in eine Bajonettöffnung (2a) des Bauteilträgers (2) eingetaucht. Der Bauteilträger (2) weist an der Unteren Seite eine Bauplattform auf, auf dem gedruckt werden kann. Der eingetauchte Verriegelungspins (10) kann über die horizontale translatorische Achse in eine Verriegelungsposition in der Bajonettöffnung (2a) gebracht werden.

Das Kopplungselement (9) ist vorzugsweise in Form einer horizontal beweglichen Schubstange (11) bereitgestellt, die durch eine Schräge (12) des Anschlags (8) in Bewegung gesetzt werden kann. Der Verriegelungspin (10) ist an einer vertikal eingebauten federverspannten Zugstange (13) angebracht. Die horizontal bewegliche Schubstange (11) führt über eine Schräge (14) an der vertikal eingebauten federverspannten Zugstange (13) zu einer Abwärtsbewegung des Verriegelungspins (10) in den Bauteilträger (2). Die horizontal bewegliche Schubstange (11) hat vorzugsweise an seinen beiden Enden Roller (15) zum Kontaktieren der jeweiligen Schrägen (12; 14). Alternativ kann eine Wippe (nicht gezeigt) an Stelle der horizontal beweglichen Schubstange (11) benutzt werden.

In der folgenden Beschreibung wird die Funktionsweise (Aufnahme/Ablage) nach einer Ausführungsform detailliert erklärt:

### Abwärtsbewegung (s. Pfeil nach unten in Fig. 1 )

Erreicht der Z-Ausleger (17) bei der Abwärtsbewegung am Z-Turm (18) eine bestimmte Position (P), wird über die am Z-Turm (18) befindliche Schräge (12) die Schubstange (11) horizontal bewegt. Diese Bewegung führt, über die Schräge (14) an der vertikal im Z-Ausleger (17) eingebauten federverspannten Zugstange (13), zu einer Abwärtsbewegung derselben und zur Freigabe des Verriegelungspins (10). Der Verriegelungspin (10) taucht in den Bauteilträger (2) ein und kann über eine horizontale Bewegung des Z-Turms (18) in die Verriegelungsposition zum Aufnehmen (bzw. in die Entriegelungsposition zum Ablegen) gebracht werden.

### Aufwärtsbewegung (s. Pfeil nach oben in Fig. 1)

Bei der Aufwärtsbewegung des Z-Auslegers (17) bleibt der Bauteilträger (2) in der Verriegelungsposition am Verriegelungspin (10) hängen und wird aus der Transportbox (3) entnommen. Im Bereich der Schräge (12) am Z-Turm (17) gibt die Schubstange (11) nun die Zugstange (13) frei und diese zieht über die Federspannung (16) den Bauteilträger (2) bzw. die Bauplattform fest an den Z-Ausleger (17).

3D Drucker (1) hat vorzugsweise einen Sensor (nicht gezeigt) der die Transportbox (3) an der vorgesehenen Stelle detektiert. 3D Drucker (1) hat vorzugsweise einen weiteren Sensor (nicht gezeigt) die den Bauteilträger (2) an der Verriegelungsvorrichtung (7) detektiert bzw. Kraftmessungen durchführt. Der 3D Drucker (1) weist eine Steuerungsvorrichtung auf, die den Aufnahmevorgang des Bauteilträgers (2) aus der Transportbox (3), den Transportvorgang desselben in die Harzwanne, den 3D Druckvorgang in der Harzwanne, den Transportvorgang desselben aus der Harzwanne zur Transportbox (3), und den Ablagevorgang des Bauteilträgers (2) in die Transportbox (3) automatisch steuert. Beim 3D Drucken kann der Bauteilträger (2) auch durch die vertikale und horizontale translatorischen Achsen schräg gefahren werden. Die Sensorsignale werden an die Steuerungsvorrichtung übermittelt. Als Sensoren können Kraftsensoren, Anwesenheits- und Abwesenheitssensoren verwendet werden.

Die Transportbox (3) kann außerhalb der Harzwanne und innerhalb des 3D Druckers (1) in einem dazu vorgesehen separaten Stelle bzw. Raum (nicht gezeigt) manuell platziert bzw. montiert werden. Die Transportbox (3) wird von dem Bauteilträger (2) vorzugsweise mittels einer Dichtung dicht verschlossen. Die Transportbox (3) kann nach dem 3D Drucken zusammen mit dem Bauteil, durch den Anwender zu einer Nachbehandlungsstation (nicht gezeigt) manuell transportiert werden. In der Nachbehandlungsstation kann die oben definierte Transportvorrichtung (4) analog verwendet werden um den Bauteilträger (2) in die Nachbehandlungskammern zu transportieren. Nachbehandlungskammern können benutzt werden um das Bauteil nachzubelichten, zu waschen, und/oder zu trocknen. Die Transportbox (3) kann aus UV opakem oder teilweise aus UV transparentem Material hergestellt werden. Vorzugsweise ist eine Dichtung zwischen dem Bauteilträger (2) und der Öffnung der Transportbox (3) vorhanden, die gegen UV-Strahlung und Flüssigkeitsaustritt abdichtet.

## Patentansprüche

1. 3D Drucker (1) umfassend,
eine Harzwanne zur Aufnahme von flüssigem Photopolymerharz zur Herstellung eines festen Bauteils;
einen Bauteilträger (2) zum schichtweisen Herausziehen des Bauteils aus der Harzwanne, wobei der Bauteilträger eine Bajonettöffnung aufweist;
eine Transportbox (3) zum Ablegen des Bauteilträgers (2), wobei die Transportbox (3) an einer bestimmten Stelle außerhalb der Harzwanne manuell platziert bzw. befestigt werden kann,
eine Transportvorrichtung (4) zum Entnehmen des Bauteilträgers (2) aus der Transportbox (3) und zum Transportieren desselben in die Harzwanne, und zum Abwärts-und Aufwärtsbewegen bzw. auch Seitwärtsbewegen des Bauteilträgers (2) in der Harzwanne,
wobei die Transportvorrichtung (4) translatorische Achsen (5) in der vertikalen und horizontalen Richtung aufweist, die jeweils mit einem Motor (6) unabhängig angetrieben werden können,
wobei die Transportvorrichtung (4) eine Verriegelungsvorrichtung (7) aufweist zum ablösbaren Verbinden des Bauteilträgers (2),
wobei die Verriegelungsvorrichtung (7) derart ausgebildet ist, dass sie bei der Abwärtsbewegung entlang der vertikalen translatorischen Achse (5) durch den Antrieb des jeweiligen Motors (6) eine bestimmte Position (P) erreicht, an dem eine, an der vertikalen translatorischen Achse (5) befindlicher Anschlag (8), ein Kopplungselement (9) in Bewegung setzt, wobei ein mit dem Kopplungselement (9) in Verbindung stehender federverspannte Verriegelungspin (10) durch die Bewegung in die Bajonettöffnung (2a) des Bauteilträgers (2) eingetaucht wird,
wobei der eingetauchte Verriegelungspins (10) über die horizontale translatorische Achse in eine Verriegelungsposition bzw. Entriegelungsposition in der Bajonettöffnung (2a) gebracht wird.

2. Der 3D Drucker (1) nach Anspruch 1, **gekennzeichnet dadurch, dass**
das Kopplungselement (9) eine horizontal bewegliche Schubstange (11) aufweist, die durch eine Schräge (12) des Anschlags (8) in Bewegung gesetzt wird, wobei der Verriegelungspin (10) an einer vertikal eingebauten federverspannten Zugstange (13) angebracht ist, und wobei die horizontal bewegliche Schubstange (11) über eine Schräge (14) an der vertikal eingebauten federverspannten Zugstange (13) zu einer Abwärtsbewegung des Verriegelungspins (10) in den Bauteilträger (2) führt.

3. Der 3D Drucker (1) nach Anspruch 2, **gekennzeichnet dadurch, dass** die horizontal bewegliche Schubstange (11) an seinen beiden Enden Roller (15) aufweist, zum Kontaktieren der jeweiligen Schrägen (12; 14).

4. Der 3D Drucker nach Anspruch 1, **gekennzeichnet dadurch, dass**
das Kopplungselement (9) eine Wippe aufweist, die durch den Anschlag (8) bei Abwärtsbewegung in Bewegung gesetzt wird, wobei der Verriegelungspin (10) an einer vertikal eingebauten federverspannten Zugstange (13) angebracht ist, und wobei die Wippe die vertikal eingebauten federverspannten Zugstange (13) zu einer Abwärtsbewegung des Verriegelungspins (10) in den Bauteilträger (1) führt.

## Claims

1. A 3D printer (1) comprising,
a resin tank for holding liquid photopolymer resin for producing a solid component;
a component carrier (2) for pulling the component out of the resin tank layer by layer, the component carrier having a bayonet opening;
a transport box (3) for depositing the component carrier (2), wherein the transport box (3) can be manually placed or fastened at a specific location outside the resin tank,
a transport device (4) for removing the component carrier (2) from the transport box (3) and for transporting it into the resin tank, and for moving the component carrier (2) downwards and upwards and/or even sideways in the resin tank,
wherein the transport device (4) has translatory axes (5) in the vertical and horizontal directions, each of which can be driven independently by a motor (6),
wherein the transport device (4) has a locking device (7) for the detachable connection of the component carrier (2),
wherein the locking device (7) is designed such that, during the downward movement along the vertical translatory axis (5), it reaches a specific position (P) by the drive of the respective motor (6), at which a stop (8) located on the vertical translatory axis (5) sets a coupling element (9) in motion, wherein a spring-loaded locking pin (10) connected to the coupling element (9) is immersed in the bayonet opening (2a) of the component carrier (2) by the movement, wherein the immersed locking pin (10) is moved via the horizontal translatory axis into a locking position or unlocking position in the bayonet opening (2a).

2. The 3D printer (1) according to claim 1 **characterized in that**
the coupling element (9) has a horizontally movable push rod (11) which is set in motion by an inclination (12) of the stop (8), wherein the locking pin (10) is attached to a vertically installed spring-loaded pull rod (13), and wherein the horizontally movable push rod (11) leads to a downward movement of the locking pin (10) into the component carrier (2) via an inclination (14) on the vertically installed spring-loaded pull rod (13).

3. The 3D printer (1) according to claim 2 **characterized in that** the horizontally movable push rod (11) has rollers (15) at its two ends for contacting the respective bevels (12; 14).

4. The 3D printer according to claim 1 **characterized in that**
the coupling element (9) has a rocker which is set in motion by the stop (8) during the downward movement, wherein the locking pin (10) is attached to a vertically installed spring-loaded pull rod (13), and wherein the rocker guides the vertically installed spring-loaded pull rod (13) to a downward movement of the locking pin (10) into the component carrier (1).

## Revendications

1. Imprimante 3D (1) comprenant
un bac à résine destiné à recevoir une résine photopolymère liquide pour la fabrication d'un composant solide ;
un support de composant (2) destiné à extraire le composant couche par couche du bac à résine, le support de composant présentant une ouverture à baïonnette ;
une boîte de transport (3) destinée à déposer le support de composant (2), la boîte de transport (3) pouvant être placée ou fixée manuellement à un endroit déterminé à l'extérieur du bac à résine,
un dispositif de transport (4) destiné à retirer le support de composant (2) de la boîte de transport (3) et à transporter celui-ci dans le bac à résine, et à déplacer le support de composant (2) vers le bas et vers le haut ou également latéralement dans le bac à résine,
le dispositif de transport (4) présentant des axes de translation (5) dans les directions verticale et horizontale pouvant chacun être entraîné indépendamment par un moteur (6),
le dispositif de transport (4) présentant un dispositif de verrouillage (7) destiné à relier de manière détachable le support de composant (2),
le dispositif de verrouillage (7) étant conçu de telle sorte que, lors du mouvement descendant le long de l'axe de translation vertical (5), il atteint, grâce à l'entraînement du moteur (6) respectif, une position (P) déterminée dans laquelle une butée (8) se trouvant sur l'axe de translation vertical (5) met en mouvement un élément de couplage (9), une broche de verrouillage (10) à ressort et reliée à l'élément de couplage (9) étant plongée par le mouvement dans l'ouverture à baïonnette (2a) du support de composant (2), la broche de verrouillage (10) plongée étant amenée par l'axe de translation horizontal dans une position de verrouillage ou de déverrouillage dans l'ouverture à baïonnette (2a).

2. Imprimante 3D (1) selon la revendication 1, **caractérisée en ce que**
l'élément de couplage (9) présente une tige de poussée (11) mobile horizontalement, qui est mise en mouvement par une inclinaison (12) de la butée (8), la broche de verrouillage (10) étant disposée sur une tige de traction (13) à ressort montée verticalement, et la tige de poussée (11) mobile horizontalement menant, via une inclinaison (14) sur la tige de traction (13) à ressort montée verticalement, à un mouvement descendant de la broche de verrouillage (10) dans le support de composant (2).

3. Imprimante 3D (1) selon la revendication 2, **caractérisée en ce que** la tige de poussée (11) mobile horizontalement présente, à ses deux extrémités, des galets (15) destinés à venir en contact avec les inclinaisons respectives (12 ; 14).

4. Imprimante 3D selon la revendication 1, **caractérisée en ce que**
l'élément de couplage (9) présente une bascule mise en mouvement par la butée (8) lors d'un mouvement descendant, la broche de verrouillage (10) étant fixée à une tige de traction (13) à ressort montée verticalement, et la bascule menant la tige de traction (13) à ressort montée verticalement à un mouvement descendant de la broche de verrouillage (10) dans le support de composant (1).
